# EUROPÄISCHE PATENTANMELDUNG

(11) **EP 4 367 996 A1**
(43) Veröffentlichungstag der Anmeldung: **15.05.2024**
(21) Anmeldenummer: 23199287.6
(22) Anmeldetag: 25.09.2023
(51) Int. Cl.: A01B 73/06, A01D 84/00, A01D 89/00

(54) **VERFAHREN ZUM VERSTELLEN EINER HEUWERBUNGSMASCHINE IN EINE TRANSPORTPOSITION**

(30) Priorität: 09.11.2022 DE 102022129615
(71) Anmelder: Maschinenfabrik Bernard Krone GmbH & Co. KG, 48480 Spelle (DE)
(72) Erfinder: Afting, Andreas, 48488 Emsbüren (DE); Hermes, Philip, 48480 Spelle (DE); SPELLER, SIMON, 48496 Hopsten (DE)

(57) **Zusammenfassung**

Die Erfindung betrifft ein Verfahren zum Verstellen einer Heuwerbungsmaschine (1) in eine Transportposition, welche Heuwerbungsmaschine (1) einen Hauptrahmen (2) sowie zwei beiderseits am Hauptrahmen (2) angeordnete Seiteneinheiten (6) aufweist, mit jeweils einem Ausleger (7), der sich in einer Seitenposition von einem Anbindungsbereich (3) des Hauptrahmens (2) entlang einer Querachse (Y) seitwärts erstreckt, und einer am Ausleger (7) angeordneten Bearbeitungseinheit (20) zur Feldbearbeitung, welche Bearbeitungseinheit (20) am Ausleger (7) verstellbar ist zwischen einer näher am Anbindungsbereich (3) angeordneten Innenposition und einer weiter vom Anbindungsbereich (3) entfernten Außenposition. Um bei einer Heuwerbungsmaschine mit Auslegern eine verbesserte Verstellbarkeit für den Transport vorzuschlagen, ist erfindungsgemäß vorgesehen, dass, ausgehend von einer Arbeitsposition, in welcher die Ausleger (7) in der Seitenposition sind, die folgenden Schritte durchgeführt werden:
- Verstellen jeder Bearbeitungseinheit (20) relativ zum Hauptrahmen (2) in eine Aufstellposition, wenigstens anteilig durch Schwenken um jeweils eine Einheit-Schwenkachse (A), welche sich bezogen auf die Seitenposition der Ausleger (7) wenigstens überwiegend entlang der Querachse (Y) erstreckt,
- Verstellen der Ausleger (7) relativ zum Hauptrahmen (2), wenigstens anteilig durch Schwenken um jeweils ein sich wenigstens überwiegend entlang einer Hochachse (Z) erstreckende, im Anbindungsbereich (3) angeordnete Ausleger-Schwenkachse (B) zur Längsachse (X) hin in eine Längsposition, wobei das Verstellen der Ausleger (7) erfolgt, während die Bearbeitungseinheiten (20) wenigstens zeitweise in der Außenposition sind, sowie
- Verstellen der Bearbeitungseinheiten (20) in die Innenposition, nachdem das Verstellen der Ausleger (7) wenigstens teilweise durchgeführt wurde.

## Beschreibung

Die vorliegende Erfindung betrifft ein Verfahren zum Verstellen einer Heuwerbungsmaschine in eine Transportposition, nach dem Oberbegriff von Anspruch 1 sowie eine Heuwerbungsmaschine nach dem Oberbegriff von Anspruch 15.

Schwader werden in der Landwirtschaft eingesetzt, um am Boden liegendes Erntegut, zum Beispiel Gras, Luzerne, Leguminosen oder Heu, zu Schwaden zusammenzufassen. Dies kann beispielsweise dazu dienen, das Erntegut besser vor Feuchtigkeit zu schützen oder es für eine nachfolgende Aufnahme mit einer Ballenpresse, einem Ladewagen oder dergleichen vorzubereiten. Allgemein fördert der Schwader das Erntegut zu einer Seite oder zur Mitte, wodurch ein Schwad entsteht. Eine Bauform des Schwader sieht einen Hauptrahmen vor, an dem zwei Ausleger mit jeweils einer Schwadereinheit angeordnet sind. Durch die sich seitlich erstreckenden Ausleger wird eine optimale Arbeitsbreite erreicht. Allerdings ist der Schwader in dieser Form nicht für einen Transport geeignet, insbesondere nicht für eine Straßenfahrt. Eine Lösung für dieses Problem besteht darin, den Schwader in eine Transportposition zu verstellen, was regelmäßig eine Verstellung der Ausleger beinhaltet. So ist es im Stand der Technik bekannt, die Ausleger um in Längsrichtung verlaufende Schwenkachsen aufwärts zu schwenken. Hierdurch lässt sich eine geringe Breite für den Transport realisieren, allerdings ragen die Ausleger mit den Schwadereinheiten weit nach oben auf, was sich zum Beispiel bei Kurvenfahrten nachteilig auswirken kann. Unter Umständen ist es hiermit auch schwierig, gesetzliche Vorgaben für den Straßenverkehr einzuhalten. Außerdem ist für das Anheben der Ausleger mit den Schwadereinheiten ein hohes Drehmoment beziehungsweise eine hohe Leistung notwendig. Ähnliche Probleme ergeben sich außer bei Schwadern auch bei anderen Heuwerbungsmaschinen, die entsprechende Ausleger mit daran angeordneten Bearbeitungseinheiten aufweisen.

Aufgabe der Erfindung ist es, bei einer Heuwerbungsmaschine mit Auslegern eine verbesserte Verstellbarkeit für den Transport vorzuschlagen.

Die Aufgabe wird gelöst mit einem Verfahren mit den Merkmalen des unabhängigen Patentanspruchs 1 sowie einer Heuwerbungsmaschine mit den Merkmalen des unabhängigen Patentanspruchs 15. Vorteilhafte Ausführungsformen sind den abhängigen Ansprüchen entnehmbar.

Dafür wird ein Verfahren zum Verstellen einer Heuwerbungsmaschine in eine Transportposition geschaffen, welche Heuwerbungsmaschine einen Hauptrahmen sowie zwei beiderseits am Hauptrahmen angeordnete Seiteneinheiten aufweist, mit jeweils einem Ausleger, der sich in einer Seitenposition von einem Anbindungsbereich des Hauptrahmens entlang einer Querachse seitwärts erstreckt, und einer am Ausleger angeordneten Bearbeitungseinheit zur Feldbearbeitung, welche Bearbeitungseinheit am Ausleger verstellbar ist zwischen einer näher am Anbindungsbereich angeordneten Innenposition und einer weiter vom Anbindungsbereich entfernten Außenposition.

Die Heuwerbungsmaschine dient im weitesten Sinne zur Umlagerung von am Boden liegendem Erntegut, insbesondere Heu, Gras, Luzerne etc., das heißt ihre Einsatzmöglichkeiten sind ausdrücklich nicht auf Heu beschränkt. Das Erntegut wird zumindest kurzzeitig erfasst, bewegt und an anderem Ort und/oder in anderer Anordnung wieder am Boden abgelegt. Der Begriff "Heuwerbungsmaschine" bezieht sich hier insbesondere auf Schwader sowie auf Wender. Die Heuwerbungsmaschine kann beispielsweise als Landmaschine mit eigenem Fahrwerk ausgebildet sein. Sie kann einen eigenen Fahrantrieb aufweisen oder dazu vorgesehen sein, von einem Schlepper gezogen zu werden. Sie kann aber auch zum Beispiel als Anbaugerät ausgebildet sein, welches von einem Schlepper oder dergleichen front- oder heckseitig getragen wird und kein Fahrwerk aufweist, welches dazu eingerichtet wäre, ihr Gewicht dauerhaft abzustützen.

Das Verfahren dient zum Verstellen der Heuwerbungsmaschine in eine Transportposition. Dies ist diejenige Position, in welcher die Heuwerbungsmaschine für einen Transport zum Einsatzort oder für den Rücktransport vom Einsatzort angeordnet wird. Man kann auch von einer Transportkonfiguration sprechen.

Die Heuwerbungsmaschine weist einen Hauptrahmen auf. Dieser Hauptrahmen kann gewissermaßen das zentrale Element der Heuwerbungsmaschine bilden und wesentlich für deren strukturelle Stabilität verantwortlich sein. Er ist in sich normalerweise starr ausgebildet, kann allerdings aus einer Mehrzahl miteinander verbundener Bauteile bestehen. Im Betriebszustand kann der Hauptrahmen über ein Fahrwerk abstützbar sein, welches entweder am Hauptrahmen angeordnet ist oder Teil einer Landmaschine ist, an welche die Heuwerbungsmaschine (zum Beispiel als Anbaugerät) angekoppelt ist. Über den Hauptrahmen und das Fahrwerk kann wenigstens ein Teil der Gewichtskraft der Heuwerbungsmaschine aufgenommen und bodenseitig abgestützt werden. Der Hauptrahmen kann außerdem zur wenigstens indirekten Verbindung mit einem Schlepper ausgebildet sein, wobei eine hierfür genutzte Deichsel als Teil des Hauptrahmens angesehen werden kann. Alternativ kann der Hauptrahmen Strukturen zur Verbindung mit einer Landmaschine aufweisen, die einen Einsatz als Anbaugerät ermöglichen.

Beiderseits am Hauptrahmen sind Seiteneinheiten angeordnet, mit jeweils einem Ausleger, der sich in einer Seitenposition von einem Anbindungsbereich des Hauptrahmens entlang einer Querachse seitwärts erstreckt, und einer am Ausleger angeordneten Bearbeitungseinheit zur Feldbearbeitung. "Beiderseits" bezieht sich auf die Anordnung quer zur Fahrtrichtung, das heißt eine der Seiteneinheiten ist auf einer Seite des Hauptrahmens angeordnet (zum Beispiel "links"), während die andere auf der anderen Seite angeordnet ist (zum Beispiel "rechts"). Jede Seiteneinheit weist einen Ausleger auf, der auch als Auslegerarm bezeichnet werden kann. Am Ausleger ist eine Bearbeitungseinheit angeordnet. Im Betriebszustand wird die Gewichtskraft der Bearbeitungseinheit wenigstens teilweise, unter Umständen auch vollständig, vom Ausleger aufgenommen und an den Hauptrahmen weitergeleitet. Da der Ausleger somit sein Eigengewicht und wenigstens einen Teil des Gewichts der Bearbeitungseinheit tragen muss, ist er entsprechend stabil ausgebildet. Der Ausleger ist mit einem Anbindungsbereich des Hauptrahmens verbunden. In einer Seitenposition, die üblicherweise während der Feldbearbeitung eingestellt ist, erstreckt sich der Ausleger vom Anbindungsbereich aus entlang einer Querachse seitwärts. Hier und im Folgenden bedeutet ein "Erstrecken entlang einer Achse", dass das entsprechende Element eine Ausdehnung in Richtung dieser Achse aufweist, unter Umständen seine größte Ausdehnung. Es bedeutet im Allgemeinen nicht, dass das Element (hier: der Ausleger) parallel zu der Achse (hier: der Querachse) verläuft, wenngleich dies möglich ist. Die Querachse verläuft dabei horizontal und quer zur Fahrtrichtung. Der Ausleger kann wenigstens teilweise gerade ausgebildet sein. Er kann in der Seitenposition wenigstens teilweise parallel zur Querachse verlaufen. Normalerweise ist jedem Ausleger ein eigener Anbindungsbereich zugeordnet. Es sind Ausgestaltungen denkbar, in denen sich der Ausleger vom Anbindungsbereich aus beiderseits erstreckt. Die am Ausleger angeordnete Bearbeitungseinheit ist im Abstand zum Anbindungsbereich mit dem Ausleger verbunden, wodurch sie bezüglich der Querachse seitlich des Hauptrahmens positionierbar ist. Die Bearbeitungseinheit dient zur Feldbearbeitung, was sich insbesondere auf die oben erwähnte Umlagerung von am Boden liegendem Erntegut bezieht. Insbesondere kann die Ausdehnung der Bearbeitungseinheit entlang der Querachse größer sein als entlang der Längsachse und/oder entlang der Hochachse, jeweils bezogen auf ihre Anordnung während der Feldbearbeitung. Das heißt die Bearbeitungseinheit kann in diesem Fall als "breit" bezeichnet werden. Wie bereits oben erwähnt, kann die Heuwerbungsmaschine als Schwader oder als Wender ausgebildet sein. Im ersteren Fall ist jede Bearbeitungseinheit als Schwadereinheit ausgebildet, im letzteren Fall als Wendereinheit.

Die Bearbeitungseinheit ist am Ausleger verstellbar zwischen einer näher am Anbindungsbereich angeordneten Innenposition und einer weiter vom Anbindungsbereich entfernten Außenposition. Das Verstellen der Bearbeitungseinheit zwischen der Innenposition und der Außenposition kann insbesondere translatorisch geradlinig entlang einer Verschiebungsachse oder Schubachse erfolgen. Bezogen auf die Arbeitsposition verläuft diese Schubachse bevorzugt wenigstens überwiegend entlang der Querachse. Genauer gesagt, kann sie in einem Winkel von weniger als 30° zur Querachse verlaufen. In diesem Zusammenhang müssen die "Innenposition" und die "Außenposition" nicht notwendigerweise der innersten Position und der äußersten Position entsprechen, welche sich einstellen lassen. Das heißt es muss nicht der gesamte Bewegungsspielraum ausgenutzt werden. Die Verstellbarkeit der jeweiligen Bearbeitungseinheit zwischen der Innenposition und der Außenposition kann während der Feldbearbeitung dazu dienen, unterschiedliche Bereiche relativ zum Hauptrahmen zu bearbeiten.

Bei dem erfindungsgemäßen Verfahren werden, ausgehend von einer Arbeitsposition, in welcher die Ausleger in der Seitenposition sind, wenigstens zwei nachfolgend beschriebene Schritte ausgeführt. Dies schließt ausdrücklich nicht aus, dass vor, während und/oder nach den genannten Schritten weitere Verfahrensschritte ausgeführt werden. Die Arbeitsposition ist dabei eine Position der Heuwerbungsmaschine, die normalerweise auf dem zu bearbeitenden Feld eingenommen wird. Es kann sich insbesondere um eine während der eigentlichen Feldbearbeitung eingenommene Position handeln, es könnte aber zum Beispiel auch eine Position sein, in welcher wenigstens eine Bearbeitungseinheit ausgehoben ist, um ein Vorgewende zu durchfahren.

Gemäß einem Verfahrensschritt erfolgt ein Verstellen jeder Bearbeitungseinheit relativ zum Hauptrahmen in eine Aufstellposition, wenigstens anteilig durch Schwenken um jeweils eine Einheit-Schwenkachse, welche sich bezogen auf die Seitenposition der Ausleger wenigstens überwiegend entlang der Querachse erstreckt. Das Verstellen der Bearbeitungseinheit kann ausschließlich im Schwenken um die Einheit-Schwenkachse bestehen. Es kann allerdings auch in einer zusammengesetzten Bewegung bestehen, die neben dem beschriebenen Schwenken um die Einheit-Schwenkachse auch ein Schwenken um eine andere Schwenkachse und/oder eine translatorische Verstellung beinhaltet. Die jeweilige Einheit-Schwenkachse kann insbesondere parallel zur Querachse verlaufen. Normalerweise verläuft sie in einem Winkel von weniger als 30° zur Querachse. Bevorzugt erfolgt einen Aufwärtsschwenken um die Einheit-Schwenkachse, also ein Schwenken, durch welches der Schwerpunkt der Bearbeitungseinheit bezüglich einer Hochachse aufwärts verlagert wird. Der Begriff "Aufstellposition" dient allgemein nur zur Bezeichnung und ist nicht einschränkend auszulegen. In vielen Fällen erfolgt allerdings ein Aufwärtsschwenken, durch welches die Bearbeitungseinheit gewissermaßen aufgestellt wird. Allerdings führt insbesondere bei einer breiten Bearbeitungseinheit, deren größte Abmessung in Richtung der Querachse gegeben ist, ein Schwenken um die in etwa in Richtung der Querachse verlaufende Einheit-Schwenkachse nur zu einer vergleichsweise geringfügigen Verlagerung des Schwerpunkts. Auch ist in diesem Fall das für die Verlagerung notwendige Drehmoment geringer als bei beispielsweise einer Schwenkbewegung um die Längsachse.

In einem weiteren Schritt erfolgt ein Verstellen der Ausleger relativ zum Hauptrahmen, wenigstens anteilig durch Schwenken um jeweils ein sich wenigstens überwiegend entlang einer Hochachse erstreckende, im Anbindungsbereich angeordnete Ausleger-Schwenkachse zur Längsachse hin in eine Längsposition, wobei das Verstellen der Ausleger erfolgt, während die Bearbeitungseinheiten wenigstens zeitweise in der Außenposition sind. Das Verstellen der Ausleger kann wiederum insbesondere ausschließlich in einem Schwenken um die Ausleger-Schwenkachse bestehen. Es kann sich allerdings auch um eine zusammengesetzte rotatorische oder rotatorischetranslatorische Bewegung handeln. Die jeweilige Ausleger-Schwenkachse kann parallel zur Hochachse verlaufen. Normalerweise verläuft sie in einem Winkel von weniger als 30° zur Hochachse. Somit verläuft die Schwenkbewegung der Ausleger überwiegend oder sogar vollständig in der horizontalen Ebene. Dies kann insofern vorteilhaft sein, als sich der Abstand vom Boden nicht oder kaum ändert und somit keine Bodenberührung zu befürchten ist. Außerdem muss beim Verstellen der Ausleger keine oder nur eine geringe Hubarbeit verrichtet werden. Allerdings kann eine gewisse Neigung der Ausleger-Schwenkachse gegenüber der Hochachse von Vorteil sein. So kann bei einer Neigung zur Längsachse hin erreicht werden, dass durch die Schwenkbewegung der Schwerpunkt der Seiteneinheiten - und somit derjenige der Heuwerbungsmaschine insgesamt - abwärts verlagert wird, was für die Transportposition vorteilhaft ist. Das Verstellen der Ausleger in die Längsposition beinhaltet normalerweise ein Schwenken um einem Winkel zwischen 80° und 100°, wenngleich Ausführungsformen denkbar sind, bei denen der Winkel kleiner oder auch größer ist. Die seitliche Verstellbarkeit der Bearbeitungseinheiten wird dazu genutzt, den Verstellvorgang effizienter zu gestalten. Im Allgemeinen lässt sich das Schwenken der Ausleger besser durchführen, wenn die Bearbeitungseinheiten möglichst weit vom Anbindungsbereich entfernt sind. Auf diese Weise kann eine Kollision der Bearbeitungseinheit mit dem Hauptrahmen und/oder mit der anderen Bearbeitungseinheit am einfachsten vermieden werden. Dementsprechend sind die Bearbeitungseinheiten während des Verstellens der Ausleger wenigstens zeitweise, gegebenenfalls auch durchgehend, in der Außenposition angeordnet.

Während sich die Ausleger in der Seitenposition seitwärts erstrecken, woraus eine erhebliche Breite der Heuwerbungsmaschine resultiert, erstrecken sie sich in der Längsposition wenigstens überwiegend in Längsrichtung, wodurch die Breite der Heuwerbungsmaschine wesentlich reduziert wird. Das Verstellen der Bearbeitungseinheiten kann dabei wesentlich dazu beitragen, dass die Ausleger näher zum Rahmen und/oder zueinander hin geschwenkt werden können, ohne dass die Bearbeitungseinheiten kollidieren.

In einem weiteren Verfahrensschritt erfolgt ein Verstellen der Bearbeitungseinheiten in die Innenposition, nachdem das Verstellen der Ausleger wenigstens teilweise durchgeführt wurde. Während die Außenposition der Bearbeitungseinheiten das Schwenken der Ausleger begünstigt, ist sie für den weiteren Transport insofern ungünstig, als die Gewichtskraft der Bearbeitungseinheit ein starkes Drehmoment auf den Ausleger ausübt. Außerdem bedeutet eine weit vom Anbindungsbereich entfernt wirkende Gewichtskraft u. U. auch eine stärkere Belastung des Hauptrahmens oder eine Destabilisierung der Heuwerbungsmaschine während des Transports. In den Ausführungsformen, in denen die Heuwerbungsmaschine ein eigenes Fahrwerk aufweist, ist dieses meistens in der Nähe des Anbindungsbereichs angeordnet. Auch unter diesem Aspekt ist es sinnvoll, den Schwerpunkt der Bearbeitungseinheit für den Transport möglichst nah am Anbindungsbereich anzuordnen. Das Verstellen der Bearbeitungseinheiten in die Innenposition kann insbesondere erfolgen, nachdem die Ausleger in die Längsposition verstellt wurden. Es kann sich allerdings auch wenigstens teilweise zeitlich hiermit überschneiden.

Es ist im Rahmen der Erfindung nicht ausgeschlossen, dass wenigstens ein Verfahrensschritt manuell durchgeführt wird. Bevorzugt werden allerdings die genannten und im Weiteren noch zu nennenden Verstellvorgänge aktorisch durchgeführt.

Die drei genannten Verfahrensschritte können nacheinander erfolgen. Es ist allerdings nicht ausgeschlossen, dass sie sich teilweise zeitlich überschneiden. Mit dem Durchführen der Schritte kann in einigen Ausführungsformen die Transportposition bereits erreicht sein, es kann allerdings auch noch wenigstens ein weiterer Schritt hierzu erfolgen. In jedem Fall wird durch zwei Verstellvorgänge, die wenigstens anteilig in Schwenkbewegungen mit vergleichsweise geringer vertikaler Schwerpunktsverlagerung bestehen, eine platzsparende Anordnung der Ausleger sowie der Bearbeitungseinheiten ermöglicht. Normalerweise erfordern die beschriebenen Schwenkbewegungen keine übermäßig großes Drehmoment und erfordern daher keine ungewöhnlich starken Aktoren. Durch einen dritten Verstellvorgang, der normalerweise einer rein translatorischen Verlagerung entspricht, wird schließlich eine bessere Anordnung des Schwerpunkts der Seiteneinheiten erreicht.

Wie bereits oben erwähnt, können sich das Verstellen der Bearbeitungseinheiten und das Verstellen der Ausleger zeitlich überschneiden. Gemäß einer Ausführungsform werden allerdings die Bearbeitungseinheiten in die Aufstellposition verstellt, bevor die Ausleger in die Längsposition verstellt werden. Eine derartige zeitliche Trennung der Verstellvorgänge kann steuerungstechnisch vorteilhaft sein. Außerdem ist es unter Umständen vorteilhaft, wenn die für die beiden Verstellvorgänge notwendigen Aktorleistungen nacheinander und nicht gleichzeitig benötigt werden.

Es ist denkbar, dass die Ausleger nach hinten in die Längsposition geschwenkt werden, beispielsweise dann, wenn die Heuwerbungsmaschine als Anbaugerät an einer Rückseite einer Landmaschine angeordnet ist. Eine andere bevorzugte Ausführungsform sieht allerdings vor, dass Die Ausleger bezüglich einer Fahrtrichtung nach vorne geschwenkt werden. D. h., das Verstellen der Ausleger beinhaltet ein Schwenken nach vorne hin zur Längsachse.

Insbesondere kann der Hauptrahmen eine sich bezüglich der Längsachse gegenüber dem Anbindungsbereich vorwärts erstreckende Deichsel aufweist, zu welcher die Ausleger in die Längsposition hin geschwenkt werden. Die Deichsel dient zur Ankopplung an einem Schlepper und weist vorderseitig eine entsprechende Aufnahme oder Kupplung zur Verbindung mit dem Schlepper auf. Sie kann starr mit dem Hauptrahmen verbunden sein und auch als Teil desselben angesehen werden. Beim Verstellen der Ausleger werden diese nach vorne geschwenkt und nähern sich somit beiderseits der Deichsel an. Vorteilhaft ragt die Deichsel in der Transportposition nach vorne über die Seiteneinheiten hinaus, so dass das Risiko einer Kollision zwischen einer Seiteneinheit und dem Schlepper minimiert wird.

Das Verfahren beinhaltet bevorzugt, dass die Bearbeitungseinheiten vor dem Verstellen der Ausleger in die Außenposition verstellt werden. Dies bedeutet normalerweise, dass die Bearbeitungseinheiten während des Verstellens der Ausleger durchgehend in der Außenposition verbleiben. Zumindest jedoch sind sie zu Beginn des Verstellens der Ausleger in der Außenposition. Dies kann je nach Geometrie der Seiteneinheiten sowie des Hauptrahmens notwendig sein, um eine oben erwähnte Kollision zu vermeiden. Auch kann es steuerungstechnisch sowie leistungstechnisch vorteilhaft sein, wenn das Verstellen der Bearbeitungseinheiten und das Verstellen der Ausleger nacheinander erfolgen.

Im Allgemeinen erfolgt das Verstellen der jeweiligen Bearbeitungseinheit relativ zum Hauptrahmen und könnte auch durch ein Verstellen des jeweiligen Auslegers realisiert werden. Beispielsweise könnte der Ausleger mitsamt der Bearbeitungseinheit um die Einheit-Schwenkachse schwenkbar sein. Dies würde allerdings bedeuten, dass der Ausleger wenigstens zwei unterschiedliche Schwenkbewegung realisieren müsste, was mechanisch im Allgemeinen schwer realisierbar ist. Es ist daher bevorzugt, dass jede Bearbeitungseinheit relativ zum Ausleger in die Aufstellposition verstellt wird. D. h., die Bearbeitungseinheit ist in einer Weise verstellbar mit dem Ausleger verbunden, die das Verstellen in die Aufstellposition ermöglicht. Insbesondere kann sie um die Einheit-Schwenkachse schwenkbar mit dem Ausleger verbunden sein.

Gemäß einer Ausgestaltung ist die Bearbeitungseinheit wenigstens indirekt mit dem Ausleger verbunden über einen Mittellenker sowie zwei entlang der Querachse seitlich hierzu versetzte und entlang der Hochachse wenigstens teilweise hierzu vertikal versetzte Seitenlenker, wobei der Mittellenker und die Seitenlenker unabhängig voneinander beiderseits schwenkbar angebunden sind und wobei vor dem Verstellen der Bearbeitungseinheit in die Aufstellposition die Bearbeitungseinheit gegenüber dem Ausleger aus einer Absenkposition wenigstens anteilig aufwärts in eine Hubposition verstellt wird durch Verstellen wenigstens eines der Lenker. Die genannten Lenker sind entweder direkt mit dem Ausleger verbunden oder mit einem mit diesem verbundenen, zwischengeordneten Bauteil (zum Beispiel einem nachfolgend beschriebenen Aufhängungsrahmen). Jeder der Lenker ist unabhängig von den anderen beiden Lenkern schwenkbar mit der Bearbeitungseinheit verbunden sowie mit dem Ausleger oder dem zwischengeordneten Bauteil. Die Seitenlenker sind beiderseits des Mittellenker angeordnet und wenigstens teilweise bezüglich der Hochachse hierzu versetzt. Sie sind also entweder wenigstens teilweise oberhalb des Mittellenkers angeordnet oder wenigstens teilweise unterhalb. In letzterem Fall kann der Mittellenker als Oberlenker bezeichnet werden und die Seitenlenker als Unterlenker. Je nach Ausgestaltung sind diese Unterlenker zumindest in der Arbeitsposition vollständig unterhalb des Oberlenkers angeordnet. Entsprechend ist auch eine Ausgestaltung denkbar, in welcher die Seitenlenker vollständig oberhalb des Mittellenkers angeordnet sind. Sofern die Seitenlenker als Unterlenker ausgebildet sind, können sie unterseitig der Bearbeitungseinheit ansetzen. Der Mittellenker ist bevorzugt aktorisch längenverstellbar, wobei er einen Linearaktor aufweisen kann, zum Beispiel einen Hydraulikzylinder. Der entsprechende Aktor wird hier als Mittellenker-Aktor oder Oberlenker-Aktor, insbesondere Mittellenker-Zylinder oder Oberlenker-Zylinder, bezeichnet. Die Seitenlenker sind bevorzugt aktorisch schwenkbar, wozu jeweils ein Linearaktor an einem Seitenlenker sowie auf Seiten des Hauptrahmens ansetzen kann. Auch diese Linearaktoren können als Hydraulikzylinder ausgebildet sein. Sie werden nachfolgend als Seitenlenker-Aktoren oder UnterlenkerAktoren oder speziell als Seitenlenker-Zylinder oder Unterlenker-Zylinder bezeichnet. Der Mittellenker-Aktor kann für eine Feineinstellung einer Arbeitshöhe der Bearbeitungseinheit genutzt werden und/oder zum Ausheben der Bearbeitungseinheit in einem Vorgewende. Die Seitenlenker-Aktoren können ebenfalls zum Ausheben genutzt werden. Neben einer aktiven Verstellung der Bearbeitungseinheit können die Seitenlenker-Aktoren, wenn sie zum Beispiel als Hydraulikzylinder ausgebildet sind, auch als passive Federelemente wirken, die der Bearbeitungseinheit ermöglichen, unterschiedliche Höhenpositionen einzunehmen. Auch können sie der Bearbeitungseinheit ein Querpendeln ermöglichen.

Bei dieser Ausführungsform wird die Bearbeitungseinheit, bevor sie in die Aufstellposition verstellt wird, gegenüber dem Ausleger aus einer Absenkposition wenigstens anteilig aufwärts in eine Hubposition verstellt, und zwar durch Verstellen wenigstens eines der Lenker. Die Absenkposition entspricht normalerweise einer Position, in welcher die Bearbeitungseinheit Erntegut am Boden erfassen kann. Die Hubposition entspricht normalerweise einer Position, in welcher die Bearbeitungseinheit einen solchen Abstand vom Boden hat, dass die kein Erntegut erfassen kann. Es kann sich hierbei um einen Vorgewendeposition handeln, die beim Durchfahren eines Vorgewendes eingestellt wird. Insgesamt wird die Bearbeitungseinheit wenigstens anteilig aufwärts verstellt, das heißt wenigstens ein Teil der Bearbeitungseinheit und/oder ihr Schwerpunkt wird angehoben. Das Verstellen in die Hubposition und das Verstellen in die Aufstellposition können kinematisch klar voneinander abgegrenzt sein. Es sind aber Ausführungsformen denkbar, bei denen das Verstellen der Bearbeitungseinheit aus der Absenkposition über die Hubposition in die Aufstellposition übergangslos erfolgt.

Die Bearbeitungseinheit kann unmittelbar mit dem Ausleger verbunden sein. In vielen Fällen ist allerdings eine indirekte Verbindung vorteilhaft. Gemäß einer entsprechenden Ausgestaltung ist die Bearbeitungseinheit beweglich mit einen Aufhängungsrahmen verbunden, wobei die Bearbeitungseinheit in die Aufstellposition verstellt wird, indem der Aufhängungsrahmen gegenüber dem Ausleger um die Einheit-Schwenkachse geschwenkt wird. Beispielsweise kann die Bearbeitungseinheit über wenigstens ein Führungselement (beispielsweise einem Lenker) und/oder wenigstens einen Aktor beweglich mit dem Aufhängungsrahmen verbunden sein. Insbesondere kann die Verbindung über den o.g. Mittellenker, die Seitenlenker sowie gegebenenfalls zugehörige Aktoren gegeben sein. Der Aufhängungsrahmen ist normalerweise aktorisch gegenüber dem Ausleger verstellbar. Durch Verstellen des Aufhängungsrahmens wird auch die Bearbeitungseinheit gegenüber dem Ausleger verstellt. Zusätzlich ist sie allerdings beweglich mit dem Aufhängungsrahmen verbunden, wodurch beispielsweise eine Höhenanpassung und/oder ein Querpendeln entsprechend einem Bodenprofil realisiert werden können. Auch ist es möglich, dass ein Ausheben der Bearbeitungseinheit in einem Vorgewende durch Verstellen, beispielsweise Schwenken, gegenüber dem Aufhängungsrahmen erfolgt und nicht durch Verstellen des Aufhängungsrahmens gegenüber dem Ausleger.

Die Beweglichkeit der Bearbeitungseinheit gegenüber dem Aufhängungsrahmen ist beim Verstellen in die Transportposition normalerweise eher nachteilig, da sich hierdurch die aktuelle Position der Bearbeitungseinheit beim Verstellen schwerer kontrollieren lässt. Es ist daher bevorzugt, dass die Bearbeitungseinheit aktorisch am Aufhängungsrahmen arretiert wird, bevor der Aufhängungsrahmen um die Einheit-Schwenkachse geschwenkt wird. Das heißt, es wird wenigstens ein Aktor eingesetzt, um die Bearbeitungseinheit am Aufhängungsrahmen zu arretieren. Insbesondere kann dabei wenigstens ein Linearaktor (zum Beispiel ein Hydraulikzylinder) in eine Endposition verstellt werden. Die entsprechende Endposition, beispielsweise eine vollständig eingezogene Position, ist durch die Geometrie des Linearaktors eindeutig definiert und lässt sich zuverlässig ansteuern. Insbesondere können der o.g. Mittellenker-Aktor und/oder die Seitenlenker-Aktoren in eine Endposition verstellt werden, um die Bearbeitungseinheit zu arretieren. Das Arretieren der Bearbeitungseinheit am Aufhängungsrahmen kann durch das o.g. Verstellen der Bearbeitungseinheit in die Hubposition erfolgen.

Je nach Ausgestaltung und Geometrie der Bearbeitungseinheit sowie gegebenenfalls anderer Komponenten der Heuwerbungsmaschine kann das Verstellen in die Aufstellposition durch ein Schwenken um unterschiedliche, gegebenenfalls auch relativ kleine Winkel erfolgen. Bevorzugt erfolgt allerdings ein Schwenken um einen vergleichsweise großen Winkel. Typischerweise ist vorgesehen, dass jede Bearbeitungseinheit um einen Winkel zwischen 70° und 120°, bevorzugt zwischen 75° und 115°, um die Einheit-Schwenkachse geschwenkt wird. In einigen Ausgestaltungen kann man davon sprechen, dass die Bearbeitungseinheit von einer in etwa waagerechten Position in eine in etwa senkrechte Aufstellposition geschwenkt wird.

Die Verstellbarkeit der Bearbeitungseinheit zwischen der Innenposition und der Außenposition kann in unterschiedlicher Weise realisiert werden. Eine Ausgestaltung sieht vor, dass jeder Ausleger einen schwenkbar mit dem Anbindungsbereich verbundenen Schwenkabschnitt und einen mit dem Schwenkabschnitt verschiebbar verbundenen Schubabschnitt aufweist, an welchem die Bearbeitungseinheit angeordnet ist, wobei das Verstellen der Bearbeitungseinheit zwischen der Innenposition und der Außenposition durch translatorisches Verschieben des Schubabschnitts am Schwenkabschnitt erfolgt. Das Verschieben des Schubabschnitts am Schwenkabschnitt kann unter Umständen auch als teleskopierendes Ausfahren sowie Einfahren beschrieben werden. Die Bearbeitungseinheit ist - zum Beispiel über den o.g. Aufhängungsrahmen - mit dem Schubabschnitt verbunden und wird durch dessen Verschiebung gegenüber dem Schwenkabschnitt mitverschoben. Der Schwenkabschnitt ist seinerseits um die Ausleger-Schwenkachse schwenkbar mit dem Anbindungsbereich verbunden. Es ist bei dieser Ausführungsform möglich, dass in der Innenposition der Bearbeitungseinheit der Schubabschnitt teilweise nach innen über den Anbindungsbereich hinausragt.

Das Verstellen der Bearbeitungseinheiten in die Innenposition trägt an sich bereits dazu bei, die Seiteneinheit und die Heuwerbungsmaschine insgesamt für den Transport zu stabilisieren. Dennoch ist es sinnvoll, Vorkehrungen zu treffen, die beispielsweise ein ungewolltes Ausschwenken eines Auslegers während des Transports verhindern. Ein solches Ausschwenken könnte zum Beispiel durch die Überlastung oder den vorübergehenden Ausfall eines Aktors hervorgerufen werden, der den Schwenkvorgang bewirkt und den Ausleger in der Längsposition halten soll. Eine Ausgestaltung sieht daher vor, dass durch das Verstellen der Bearbeitungseinheit in die Innenposition ein Formschluss zwischen der Seiteneinheit und dem Hauptrahmen hergestellt wird, welcher ein Schwenken des Auslegers aus der Längsposition verhindert. Da der entsprechende Formschluss durch das Verstellen der Bearbeitungseinheit hergestellt wird, kann er naturgemäß auch normalerweise nur durch ein entgegengesetztes Verstellen der Bearbeitungseinheit wieder gelöst werden, nicht jedoch durch ein Schwenken des Auslegers. Der Formschluss kann insbesondere wenigstens anteilig in Richtung der Querachse gegeben sein. Die hier beschriebene Ausführungsform ist besonders vorteilhaft, da mit einer einzigen Bewegung zwei positive Effekte erreicht werden, nämlich einerseits die stabilisierende Anordnung der Bearbeitungseinheit sowie andererseits die Arretierung des Auslegers. Zusätzlich kann ein Formschluss in Richtung der Hochachse hergestellt werden, wodurch zum Beispiel ein Teil des Gewichts der Seiteneinheit an dieser Stelle vom Hauptrahmen abgestützt werden kann.

Es wäre denkbar, dass der Ausleger durch den entsprechenden Formschluss am Hauptrahmen gesichert wird, während die Bearbeitungseinheit gewissermaßen indirekt über den Ausleger gesichert ist. Dies würde allerdings möglicherweise der Bearbeitungseinheit, welche eine zumindest vergleichbare, eventuell auch größere Masse aufweist als der Ausleger, noch ermöglichen sich gegenüber dem Ausleger zu bewegen, was beispielsweise bei seitlichen Kräften während einer Kurvenfahrt nachteilig sein könnte. Es ist daher bevorzugt, dass der Formschluss zwischen einem mit dem Hauptrahmen verbundenen ersten Verriegelungselement und einem mit der Bearbeitungseinheit verbundenen zweiten Verriegelungselement hergestellt wird. Das erste Verriegelungselement kann insbesondere mit einer oben erwähnten Deichsel verbunden sein. Das zweite Verriegelungselement ist mit der Bearbeitungseinheit verbunden. Es ist somit auch mit dem Ausleger verbunden, allerdings nur indirekt über die Bearbeitungseinheit sowie gegebenenfalls den oben erwähnten Aufhängungsrahmen. Hinsichtlich der Ausgestaltung der beiden Verriegelungselemente sind eine Vielzahl von Möglichkeiten gegeben. Das erste Führungselement kann eine Art Führungsprofil für das zweite Verriegelungselement bilden, an welchem dieses beim Verstellen der Bearbeitungseinheit in die Innenposition entlanggeführt wird. Um die Reibung zu minimieren, könnte das zweite Verriegelungselement auch als Rolle ausgebildet sein, welche an oder auf dem ersten Verriegelungselement abrollt.

Eine Ausgestaltung sieht vor, dass die Heuwerbungsmaschine als Schwader ausgebildet ist und jede Bearbeitungseinheit als Schwadereinheit ausgebildet ist, die eine Aufnahmevorrichtung aufweist sowie eine Querfördervorrichtung, wobei die Aufnahmevorrichtung dazu eingerichtet ist, landwirtschaftliches Erntegut vom Boden aufzunehmen und an die Querfördervorrichtung zu übergeben, und die Querfördervorrichtung dazu eingerichtet ist, das übergebene Erntegut entlang der Querachse zu fördern und schwadweise auf dem Boden abzulegen. Schwader sind dazu vorgesehen, Erntegut, welches flächig und/oder zufällig verteilt auf dem Boden liegt, in Schwaden abzulegen. Derartige Maschinen werden auch als Merger bezeichnet.

Die jeweilige Schwadereinheit weist diejenigen Elemente des Schwaders auf, die bestimmungsgemäß direkt mit dem Erntegut in Kontakt kommen und dieses transportieren. Die jeweilige Schwadereinheit weist eine Aufnahmevorrichtung auf sowie als nachgeordnete Vorrichtung eine Querfördervorrichtung. Die Aufnahmevorrichtung, welche auch als Pickup bezeichnet werden kann, weist in der Regel wenigstens einen Rotor auf, der das Erntegut mittels Zinken vom Boden aufnimmt und in Richtung der Querfördervorrichtung weiterfördert. Es können auch zwei Rotoren vorgesehen sein, ein Aufnahmerotor zur Aufnahme des Ernteguts und ein Übergaberotor zur Übergabe an die Querfördervorrichtung. In der Arbeitsposition ist die Querfördervorrichtung bezüglich der Längsachse wenigstens teilweise hinter der Aufnahmevorrichtung angeordnet. Die Aufnahmevorrichtung übergibt das Erntegut an die Querfördervorrichtung, was auch ein Werfen oder Fallenlassen des Ernteguts einschließen kann. Die Querfördervorrichtung ist dazu eingerichtet, das übergebene Erntegut entlang der Querachse zu fördern und schwadweise auf dem Boden abzulegen. Die Querfördervorrichtung weist hierzu ein Förderelement auf, in aller Regel ein endlos umlaufendes Förderelement, beispielsweise ein Förderband oder Gliederband, wobei man auch von einem Bandschwader sprechen kann. Dieses Förderelement kann eine Förderfläche bilden oder aufweisen, auf der das Erntegut aufgenommen wird. Normalerweise fördert die Querfördervorrichtung das Erntegut parallel zur Querachse, sie könnte es allerdings auch in einem gewissen Winkel zur Querachse fördern. Typischerweise ist, bezogen auf die Arbeitsposition, die Dimension einer Schwadereinheit entlang der Querachse deutlich größer (zum Beispiel wenigstens dreimal größer) als entlang der Längsachse. Des Weiteren ist ihre Dimension entlang der Längsachse normalerweise größer als entlang der Hochachse. Daher erleichtert das Verstellen in die Aufstellposition eine platzsparende Anordnung in der Transportposition.

Durch die Erfindung wird außerdem eine Heuwerbungsmaschine zur Verfügung gestellt, welche einen Hauptrahmen sowie zwei beiderseits am Hauptrahmen angeordnete Seiteneinheiten aufweist, mit jeweils einem Ausleger, der sich in einer Seitenposition von einem Anbindungsbereich am Hauptrahmen entlang einer Querachse seitwärts erstreckt, und einer am Ausleger angeordneten Bearbeitungseinheit zur Feldbearbeitung, welche Bearbeitungseinheit am Ausleger verstellbar ist zwischen einer näher am Anbindungsbereich angeordneten Innenposition und einer weiter vom Anbindungsbereich entfernten Außenposition, wobei die Heuwerbungsmaschine, ausgehend von einer Arbeitsposition, in welcher die Ausleger in der Seitenposition sind, zur Durchführung der folgenden Schritte eingerichtet ist:
- Verstellen jeder Bearbeitungseinheit relativ zum Hauptrahmen in eine Aufstellposition, wenigstens anteilig durch Schwenken um jeweils eine Einheit-Schwenkachse, welche sich bezogen auf die Seitenposition der Ausleger wenigstens überwiegend entlang der Querachse erstreckt,
- Verstellen der Ausleger relativ zum Hauptrahmen, wenigstens anteilig durch Schwenken um jeweils ein sich wenigstens überwiegend entlang einer Hochachse erstreckende, im Anbindungsbereich angeordnete Ausleger-Schwenkachse zur Längsachse hin in eine Längsposition, wobei das Verstellen der Ausleger erfolgt, während die Bearbeitungseinheiten wenigstens zeitweise in der Außenposition sind, sowie
- Verstellen der Bearbeitungseinheiten in die Innenposition, nachdem das Verstellen der Ausleger wenigstens teilweise durchgeführt wurde.

Die genannten Begriffe wurden bereits oben mit Bezug auf das erfindungsgemäße Verfahren erläutert. Vorteilhafte Ausführungsformen der erfindungsgemäßen Heuwerbungsmaschine entsprechen denen des erfindungsgemäßen Verfahrens.

Die Heuwerbungsmaschine kann dazu eingerichtet sein, dass die genannten Schritte manuell durchgeführt werden. Normalerweise ist sie dazu eingerichtet, die Schritte aktorisch durchzuführen. Insbesondere kann sie dazu eingerichtet sein, diese (sowie optionale weitere) Schritte in einer vorbestimmten zeitlichen Abfolge selbstständig durchzuführen, nachdem ein Benutzer durch eine Eingabe die Verstellung in die Transportposition ausgelöst hat.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Ansicht einer als Schwader ausgebildeten erfindungsgemäßen ersten Heuwerbungsmaschine in einer Arbeitsposition mit Auslegern in einer Seitenposition und Schwadereinheiten in einer Absenkposition sowie in einer Innenposition;
- Fig. 2: eine Seitenansicht einer Schwadereinheit des Schwaders aus Fig. 1;
- Fig. 3: eine perspektivische Ansicht der Heuwerbungsmaschine aus Fig.1 in einer Arbeitsposition mit den Schwadereinheiten in der Absenkposition sowie in einer Außenposition;
- Fig. 4: eine perspektivische Ansicht der Heuwerbungsmaschine aus Fig.1 in einer Arbeitsposition mit den Schwadereinheiten in einer Hubposition sowie in der Außenposition;
- Fig. 5: eine perspektivische Ansicht der Heuwerbungsmaschine aus Fig.1 mit den Schwadereinheiten in einer Aufstellposition;
- Fig. 6: eine perspektivische Ansicht der Heuwerbungsmaschine aus Fig.1 mit den Auslegern in einer Längsposition;
- Fig. 7: eine perspektivische Ansicht der Heuwerbungsmaschine aus Fig.1 mit den Auslegern in einer Längsposition und den Schwadereinheiten in der Innenposition;
- Fig. 8: eine perspektivische Detailansicht der Heuwerbungsmaschine in einem Fig.6 entsprechenden Zustand; sowie
- Fig. 9: eine perspektivische Detailansicht der Heuwerbungsmaschine aus Fig. 8 in einem Fig.7 entsprechenden Zustand.

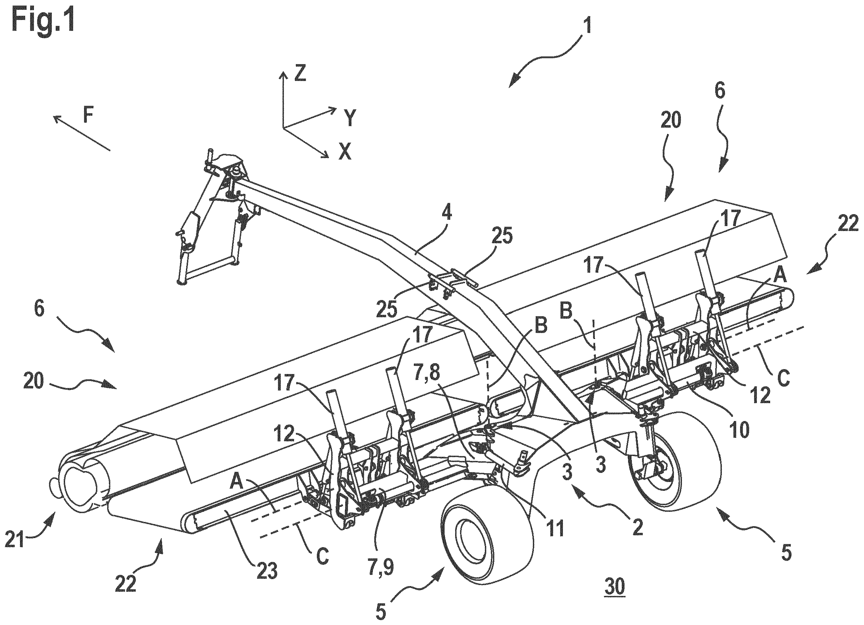

Fig. 1 zeigt eine erfindungsgemäße Heuwerbungsmaschine, in diesem Fall einen Schwader 1, der dazu vorgesehen ist, von einem hier nicht dargestellten Schlepper gezogen zu werden. Der Schwader 1 weist einen Hauptrahmen 2 auf, der über zwei Räder eines Fahrwerks 5 an einem Boden 30 abstützbar ist. Außerdem weist der Hauptrahmen 2 eine in einer Fahrtrichtung F nach vorne weisende, sich entlang einer Längsachse X erstreckende Deichsel 4 auf, über welche er an den Schlepper angekoppelt wird. Parallel zu einer Querachse Y sind beiderseits des Hauptrahmens 2 zwei Seiteneinheiten 6 angeordnet, mit jeweils einem Ausleger 7, an dem eine als Bearbeitungseinheit dienende Schwadereinheit 20 angeordnet ist. Jeder Ausleger 7 ist mit einem Anbindungsbereich 3 des Hauptrahmens 2 verbunden und erstreckt sich in einer in Fig.1, 3, 4 und 5 dargestellten Seitenposition entlang der Querachse Y seitwärts. Die beiden Schwadereinheiten 20 sowie ihre Verbindung mit dem Hauptrahmen 2 sind identisch beziehungsweise spiegelsymmetrisch, weshalb nachfolgend nur jeweils eine Schwadereinheit 20 betrachtet wird.

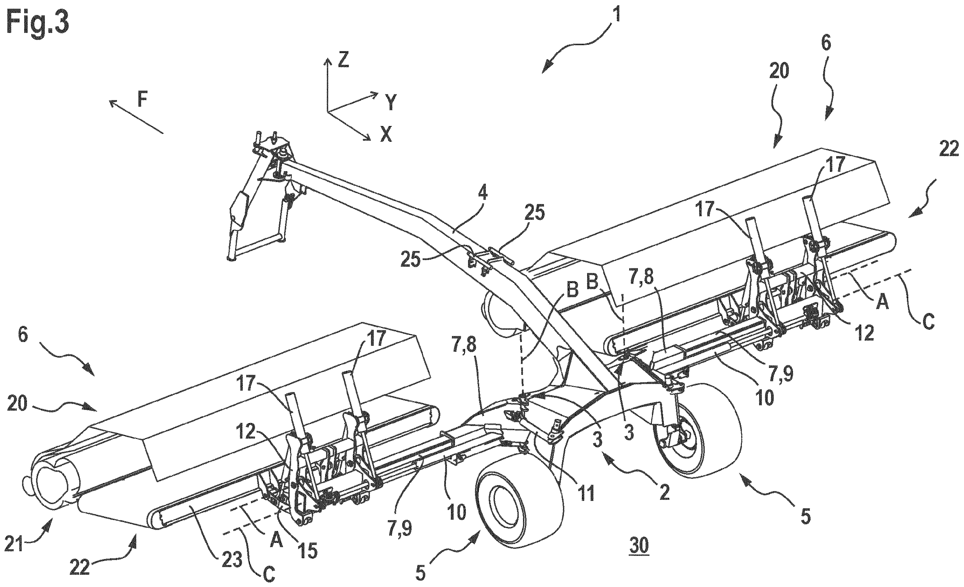

Die Schwadereinheit 20 weist eine Aufnahmevorrichtung 21 auf sowie eine bezüglich der Längsachse X dahinter angeordnete Querfördervorrichtung 22. Wenn der Schwader 1 in Fahrtrichtung F gezogen wird, nimmt die Aufnahmevorrichtung 21 Erntegut vom Boden 30 auf und übergibt es an die Querfördervorrichtung 22, die es mittels eines Förderbandes (ohne Bezugszeichen) bezüglich der Querachse Y seitwärts gefördert und schwadweise auf dem Boden 30 abgelegt. Fig. 1 zeigt eine Konfiguration des Schwaders 1, die für eine Ablage des Erntegutes bezüglich der Querachse Y seitlich nach außen vorgesehen ist. Dabei sind die beiden Schwadereinheiten 20 entlang der Querachse Y benachbart zueinander angeordnet und ihre Förderbänder werden entweder für eine Ablage zu einer Seite gleichsinnig angetrieben oder für eine Ablage zu beiden Seiten gegensinnig angetrieben. Alternativ können die Schwadereinheiten 20 auch, wie in Fig.3 gezeigt, voneinander beabstandet angeordnet werden, so dass Erntegut (zumindest auch) mittig, also zwischen den Schwadereinheiten 20, abgelegt werden kann.

Um die unterschiedlichen Stellungen zu realisieren, weist jeder Ausleger 7 zwei Abschnitte 8, 9 auf, nämlich einen Schwenkabschnitt 8, der mit dem Anbindungsbereich 3 verbunden ist, sowie einen mit dem Schwenkabschnitt 8 verschiebbar verbundenen Schubabschnitt 9, mit welchem die Schwadereinheit 20 verbunden ist. Durch einen hier als Hydraulikzylinder ausgebildeten Schubaktor 10 kann der Schubabschnitt 9 mit der Schwadereinheit 20 entlang einer Schubachse C verstellt werden. Somit können die Schwadereinheiten 20 zwischen einer in Fig.1 dargestellten Innenposition, in welcher sie näher am Anbindungsbereich 3 angeordnet sind, und einer in Fig.3 dargestellten Außenposition, in welcher sie weiter von Anbindungsbereich 3 entfernt sind, verstellt werden. Jeder der Schwenkabschnitte 8 ist wiederum um eine Ausleger-Schwenkachse B, welche in diesem Beispiel gegenüber der Hochachse Z um 5° in Fahrtrichtung F zur Längsachse X hin geneigt ist, schwenkbar mit dem Anbindungsbereich 3 verbunden. Er kann mittels eines als Hydraulikzylinder ausgebildeten Schwenkaktors 11 aktiv geschwenkt werden.

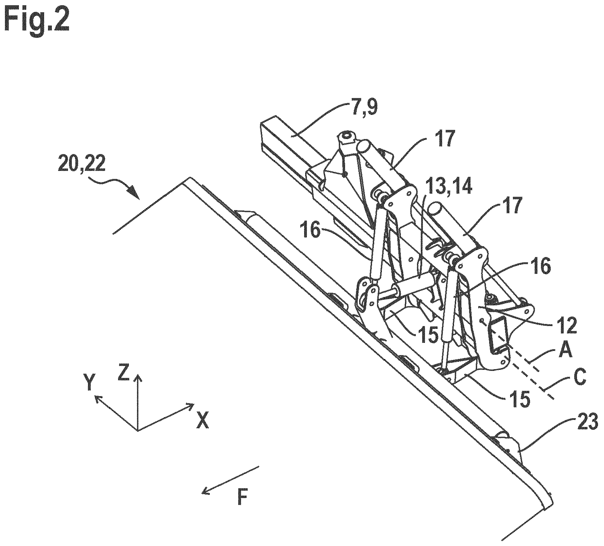

Wie insbesondere in Fig. 2 erkennbar ist, ist die jeweilige Schwadereinheit 30 nicht direkt mit dem Schubabschnitt 9 verbunden, sondern über einen zwischengeordneten Aufhängungsrahmen 12. Mit diesem Aufhängungsrahmen 12 ist die Schwadereinheit 20 wiederum beweglich verbunden. Ein in sich starrer Schwadereinheit-Rahmen 23 der Schwadereinheit 20 ist über einen als Oberlenkeraktor 14 ausgebildeten Oberlenker 13 sowie zwei entlang der Querachse Y seitlich hierzu versetzte und bezüglich der Hochachse Z darunter angeordnete Unterlenker 15 mit dem Aufhängungsrahmen 12 verbunden. Der hier als Hydraulikzylinder ausgebildete Oberlenkeraktor 14 ist längenverstellbar und über Schwenklager (ohne Bezugszeichen) einerseits mit dem Aufhängungsrahmen 12 sowie andererseits mit den Einheit-Rahmen 23 verbunden. Die Unterlenker 15 sind ebenfalls über Schwenklager mit dem Einheit-Rahmen 23 sowie dem Aufhängungsrahmen 12 verbunden. An jedem Unterlenker 15 setzt ein ebenfalls als Hydraulikzylinder ausgebildeter Unterlenkeraktor 16 an, der mit dem Unterlenker 15 sowie mit dem Aufhängungsrahmen 12 schwenkbar verbunden ist.

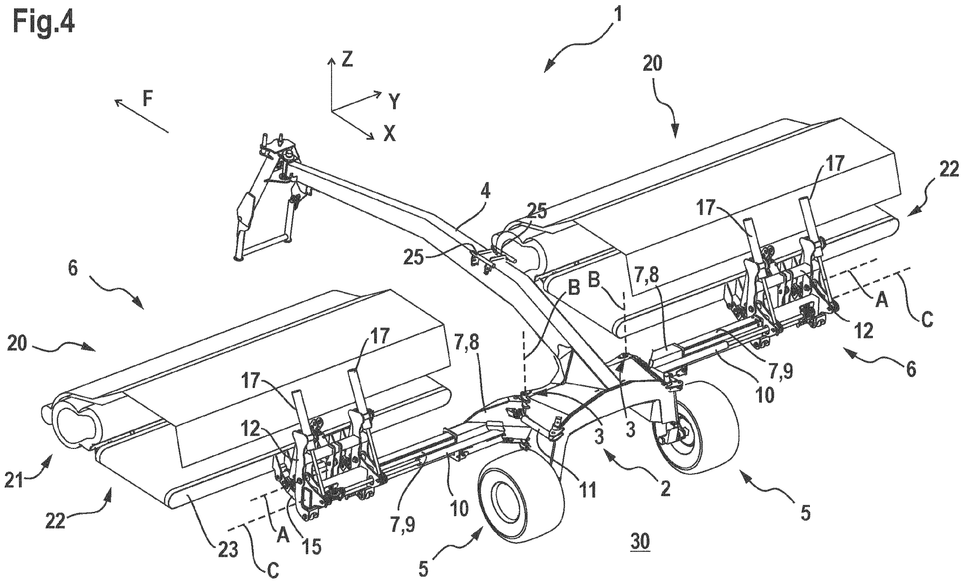

Durch Längenverstellung des Oberlenkers 13 ist es zum Beispiel möglich, eine Arbeitshöhe der Schwadereinheit 20 einzustellen. Außerdem kann die Schwadereinheit 20 aus einer in Fig.1, 2 und 3 gezeigten Absenkposition in eine in Fig.4 gezeigte Hubposition angehoben werden, indem der Oberlenkeraktor 14 sowie die Unterlenkeraktoren 16 eingefahren werden. Hierdurch kann zum Beispiel ein Ausheben im Vorgewende erfolgen. In der Absenkposition sind die Aufnahmevorrichtungen 21 so dicht am Boden angeordnet, dass sie Erntegut aufnehmen können. Außerdem wirken die Unterlenkeraktoren 16 als Federelemente, die einen Teil der Gewichtskraft der Schwadereinheit 20 über den Aufhängungsrahmen 12 an den Hauptrahmen 2 weitergeben. Durch ihre passive Auslenkung kann die Schwadereinheit 20 insgesamt aufwärts oder abwärts ausgelenkt werden, zum Beispiel um einem Bodenprofil zu folgen. Durch eine unterschiedliche, also asymmetrische Auslenkung der beiden Unterlenker 15 und eine hiervon begleiteten unterschiedlichen Kompression und/oder Expansion der Unterlenkeraktoren 16 kann die Schwadereinheit 20 auch ein Querpendeln ausführen.

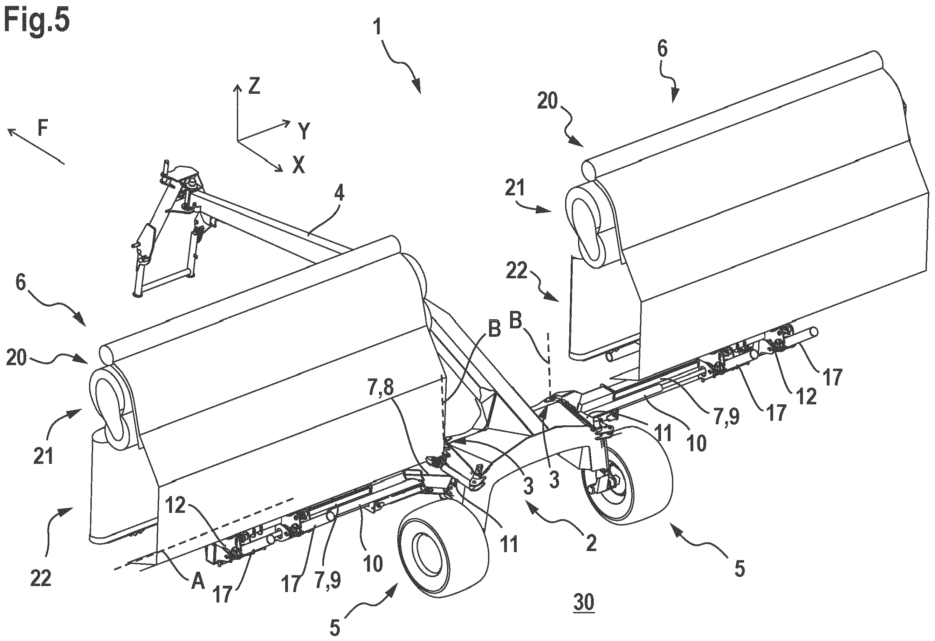

Der Aufhängungsrahmen 7 ist seinerseits um eine Einheit-Schwenkachse A schwenkbar mit dem Schubabschnitt 9 des Auslegers 7 verbunden und kann mittels zweier Aufstellaktoren 17 in eine in Fig.5 dargestellte Aufstellposition aufwärts geschwenkt werden.

Die Aufhängung der Schwadereinheiten 20 gegenüber dem Hauptrahmen 2 lässt sich auch auf Bearbeitungseinheiten von Wendern oder von Mähmaschinen übertragen, welche als Wendereinheiten oder als Mäheinheiten ausgebildet sind. Gleiches gilt für das nachfolgend beschriebene Verfahren.

Anhand von Fig. 1 sowie 3 bis 9 wird nun ein erfindungsgemäßes Verfahren zum Verstellen des Schwaders 1 in eine Transportposition erläutert. Die Transportposition ist für einen Transport des Schwaders 1 zum Einsatzort oder für den Rücktransport vom Einsatzort vorgesehen. Fig. 1 repräsentiert den Ausgangszustand, in welchem die Ausleger 7 in der Seitenposition angeordnet sind und die Schwadereinheiten 20 in der Innenposition und in der Absenkposition. Durch Aktivierung der Schubaktoren 10 werden die Schubabschnitte 9 mit den Schwadereinheiten 20 aus der Innenposition entlang der Schubachse C in die in Fig. 3 gezeigte Außenposition verstellt. In diesem Fall erfolgt die Verstellung parallel zur Querachse Y. Vor, während und/oder nach der Verstellung der Schwadereinheit 20 in die Außenposition wird die jeweilige Schwadereinheit 20 am Aufhängungsrahmen 12 arretiert, in dem sowohl der Oberlenkeraktor 14 als auch die Unterlenkeraktoren 16 in ihre jeweilige Endposition minimaler Länge eingefahren werden. Hierdurch erreichen die Schwadereinheiten 20 die in Fig.4 dargestellte Hubposition.

In einem nächsten Verfahrensschritt werden die Aufstellaktoren 17 aktiviert, um den Aufhängungsrahmen 12 mit der daran angeordneten Schwadereinheit 20 um die Einheit-Schwenkachse A aufwärts zu schwenken. In diesem Beispiel erfolgt ein Schwenken um einen Winkel von ungefähr 90°, was allerdings nur beispielhaft zu verstehen ist. In anderen Ausgestaltungen kann der Winkel insbesondere zwischen 60° und 120° liegen. Durch den Schwenkvorgang erreichen die Schwadereinheiten 20 die in Fig. 5 dargestellte Aufstellposition.

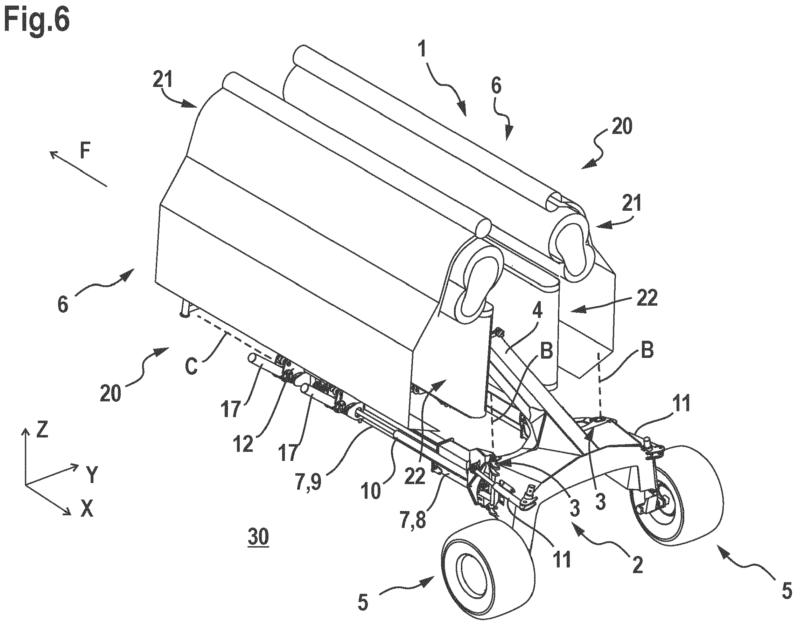

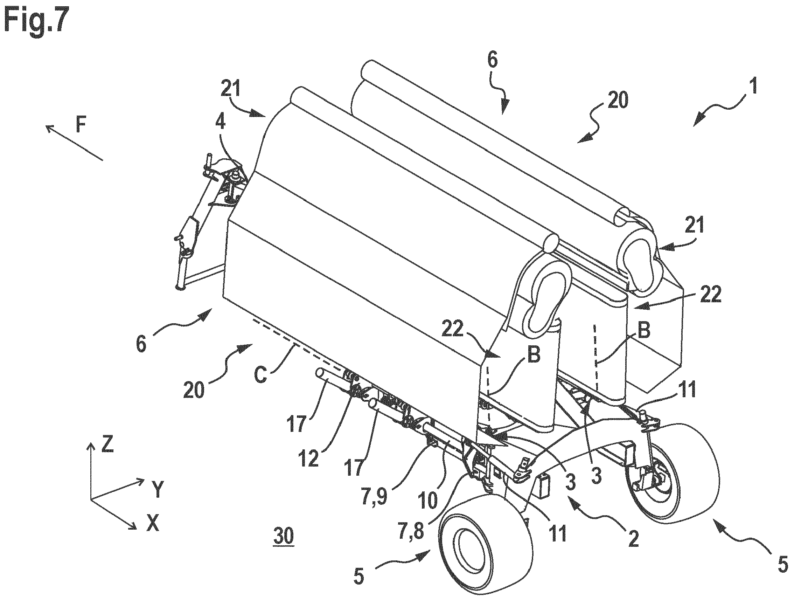

In einem nächsten Schritt des Verfahrens werden die Schwenkaktoren 11 aktiviert, wodurch die Ausleger 7 aus der Seitenposition um einen Winkel von ca. 90° in Fahrtrichtung F nach vorne und zur Längsachse X hin geschwenkt werden, bis sie die in Fig. 6 dargestellte Längsposition erreichen. Sie sind dabei in geringem Abstand zur Deichsel 4 des Hauptrahmens 2 sowie zueinander angeordnet. Aufgrund der leichten Neigung der Ausleger-Schwenkachsen B gegenüber der Hochachse Z resultiert aus der Schwenkbewegung auch eine Abwärtsverlagerung des Schwerpunkts der Seiteneinheiten 6, wodurch sich auch der Schwerpunkt des Schwaders 1 insgesamt abwärts verlagert. Allerdings sind die Schwadereinheiten 20 noch in der Außenposition angeordnet, wodurch sich ein hohes Drehmoment auf den jeweiligen Ausleger 7 ergibt sowie eine ungünstige Massenverteilung in Bezug auf das Fahrwerk 5. Aus diesem Grund werden beide Schwadereinheiten 20 in die Innenposition zurück verstellt, wodurch der Schwader 1 die in Fig. 7 dargestellte Transportposition erreicht.

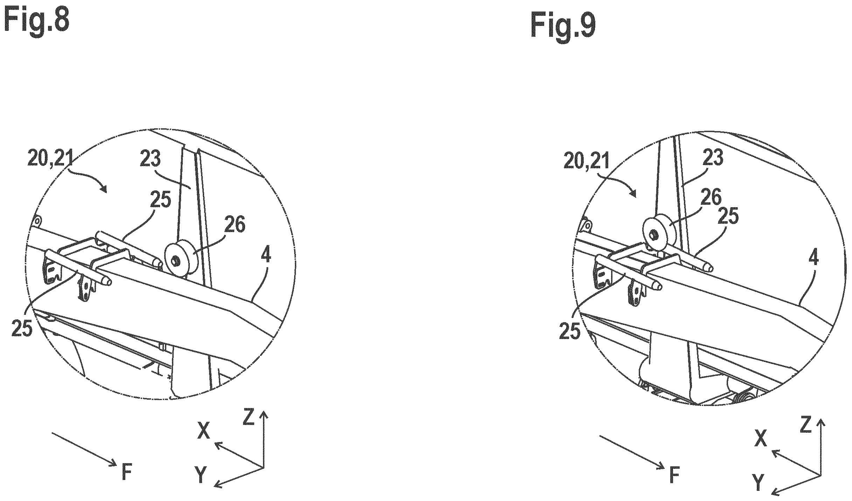

Fig. 8 und 9 zeigen Detailansichten des Schwaders 1, die einen Arretierungsmechanismus betreffen. Wie auch in Fig. 1 und 3 erkennbar ist, sind schienenartige erste Arretierungselemente 25 starr mit der Deichsel 4 verbunden. Außerdem ist jeweils ein als Rolle ausgebildetes zweites Arretierungselement 26 drehbar mit dem Einheit-Rahmen 23 jeder Schwadereinheit 20 verbunden. Bezogen auf die Arbeitsposition des Schwaders 1 (wie in Fig. 1 und 3 gezeigt) ist das zweite Arretierungselement 26 unterseitig der Schwadereinheit 20 angeordnet.

Fig. 8 entspricht einem Zustand gemäß Fig. 6, wobei die Ausleger 7 in der Längsposition angeordnet sind und die Schwadereinheiten 20 in der Außenposition. In diesem Zustand sind die beiden Arretierungselemente 25, 26 nicht in Kontakt miteinander. Dies ändert sich, wenn die Schwadereinheiten 20 in Richtung auf die Innenposition verstellt werden. Hierdurch kommt das zweite Arretierungselement 26 in Kontakt mit dem ersten Arretierungselement 25 und rollt dabei über dieses ab, bis schließlich die in Fig. 9 gezeigte Innenposition der Schwadereinheit 20 erreicht ist, was Fig.7 entspricht. Durch ein hier nicht im Detail dargestelltes außenseitiges Profil des zweiten Arretierungselements 26 wird ein Formschluss in Richtung der Querachse Y hergestellt, der ein Ausschwenken der Ausleger 7 aus der Längsposition verhindert. Zusätzlich wird über die Arretierungselemente 25, 26 ein Formschluss entlang der Hochachse Z hergestellt, wodurch auch vertikale Kräfte, zum Beispiel Anteile der Gewichtskraft, von der Schwadereinheit 20 zur Deichsel 4 übertragen werden können.

## Patentansprüche

1. Verfahren zum Verstellen einer Heuwerbungsmaschine (1) in eine Transportposition, welche Heuwerbungsmaschine (1) einen Hauptrahmen (2) sowie zwei beiderseits am Hauptrahmen (2) angeordnete Seiteneinheiten (6) aufweist, mit jeweils einem Ausleger (7), der sich in einer Seitenposition von einem Anbindungsbereich (3) des Hauptrahmens (2) entlang einer Querachse (Y) seitwärts erstreckt, und einer am Ausleger (7) angeordneten Bearbeitungseinheit (20) zur Feldbearbeitung, welche Bearbeitungseinheit (20) am Ausleger (7) verstellbar ist zwischen einer näher am Anbindungsbereich (3) angeordneten Innenposition und einer weiter vom Anbindungsbereich (3) entfernten Außenposition, wobei, ausgehend von einer Arbeitsposition, in welcher die Ausleger (7) in der Seitenposition sind, die folgenden Schritte durchgeführt werden:
- Verstellen jeder Bearbeitungseinheit (20) relativ zum Hauptrahmen (2) in eine Aufstellposition, wenigstens anteilig durch Schwenken um jeweils eine Einheit-Schwenkachse (A), welche sich bezogen auf die Seitenposition der Ausleger (7) wenigstens überwiegend entlang der Querachse (Y) erstreckt,
- Verstellen der Ausleger (7) relativ zum Hauptrahmen (2), wenigstens anteilig durch Schwenken um jeweils ein sich wenigstens überwiegend entlang einer Hochachse (Z) erstreckende, im Anbindungsbereich (3) angeordnete Ausleger-Schwenkachse (B) zur Längsachse (X) hin in eine Längsposition, wobei das Verstellen der Ausleger (7) erfolgt, während die Bearbeitungseinheiten (20) wenigstens zeitweise in der Außenposition sind, sowie
- Verstellen der Bearbeitungseinheiten (20) in die Innenposition, nachdem das Verstellen der Ausleger (7) wenigstens teilweise durchgeführt wurde.

2. Verfahren nach einem der vorangehenden Ansprüche, **dadurch gekennzeichnet, dass** die Bearbeitungseinheiten (20) in die Aufstellposition verstellt werden, bevor die Ausleger (7) in die Längsposition verstellt werden.

3. Verfahren nach einem der vorangehenden Ansprüche, **dadurch gekennzeichnet, dass** die Ausleger (7) bezüglich einer Fahrtrichtung (F) nach vorne geschwenkt werden.

4. Verfahren nach einem der vorangehenden Ansprüche, **dadurch gekennzeichnet, dass** der Hauptrahmen (2) eine sich bezüglich der Längsachse (X) gegenüber dem Anbindungsbereich (3) vorwärts erstreckende Deichsel (4) aufweist, zu welcher die Ausleger (7) in die Längsposition hin geschwenkt werden.

5. Verfahren nach einem der vorangehenden Ansprüche, **dadurch gekennzeichnet, dass** die Bearbeitungseinheiten (20) vor dem Verstellen der Ausleger (7) in die Außenposition verstellt werden.

6. Verfahren nach einem der vorangehenden Ansprüche, **dadurch gekennzeichnet, dass** jede Bearbeitungseinheit (20) relativ zum Ausleger (7) in die Aufstellposition verstellt wird.

7. Verfahren nach einem der vorangehenden Ansprüche, **dadurch gekennzeichnet, dass** die Bearbeitungseinheit (20) wenigstens indirekt mit dem Ausleger (7) verbunden ist über einen Mittellenker (8) sowie zwei entlang der Querachse (Y) seitlich hierzu versetzte und entlang der Hochachse (Z) wenigstens teilweise hierzu vertikal versetzte Seitenlenker (10), wobei der Mittellenker (8) und die Seitenlenker (10) unabhängig voneinander beiderseits schwenkbar angebunden sind und wobei vor dem Verstellen der Bearbeitungseinheit (20) in die Aufstellposition die Bearbeitungseinheit (20) gegenüber dem Ausleger (7) aus einer Absenkposition wenigstens anteilig aufwärts in eine Hubposition verstellt wird durch Verstellen wenigstens eines der Lenker (8, 10).

8. Verfahren nach einem der vorangehenden Ansprüche, **dadurch gekennzeichnet, dass** die Bearbeitungseinheit (20) beweglich mit einen Aufhängungsrahmen (12) verbunden ist, wobei die Bearbeitungseinheit (20) in die Aufstellposition verstellt wird, indem der Aufhängungsrahmen (12) gegenüber dem Ausleger (7) um die Einheit-Schwenkachse (A) geschwenkt wird.

9. Verfahren nach einem der vorangehenden Ansprüche, **dadurch gekennzeichnet, dass** die Bearbeitungseinheit (20) aktorisch am Aufhängungsrahmen (12) arretiert wird, bevor der Aufhängungsrahmen (12) um die Einheit-Schwenkachse (A) geschwenkt wird.

10. Verfahren nach einem der vorangehenden Ansprüche, **dadurch gekennzeichnet, dass** jede Bearbeitungseinheit (20) um einen Winkel zwischen 70° und 120°, bevorzugt zwischen 75° und 115°, um die Einheit-Schwenkachse (A) geschwenkt wird.

11. Verfahren nach einem der vorangehenden Ansprüche, **dadurch gekennzeichnet, dass** jeder Ausleger (7) einen schwenkbar mit dem Anbindungsbereich (3) verbundenen Schwenkabschnitt (8) und einen mit dem Schwenkabschnitt (8) verschiebbar verbundenen Schubabschnitt (9) aufweist, an welchem die Bearbeitungseinheit (20) angeordnet ist, wobei das Verstellen der Bearbeitungseinheit (20) zwischen der Innenposition und der Außenposition durch translatorisches Verschieben des Schubabschnitts (9) am Schwenkabschnitt (8) erfolgt.

12. Verfahren nach einem der vorangehenden Ansprüche, **dadurch gekennzeichnet, dass** durch das Verstellen der Bearbeitungseinheit (20) in die Innenposition ein Formschluss zwischen der Seiteneinheit (6) und dem Hauptrahmen (2) hergestellt wird, welcher ein Schwenken des Auslegers (7) aus der Längsposition verhindert.

13. Verfahren nach einem der vorangehenden Ansprüche, **dadurch gekennzeichnet, dass** der Formschluss zwischen einem mit dem Hauptrahmen (2) verbundenen ersten Verriegelungselement (25) und einem mit der Bearbeitungseinheit (20) verbundenen zweiten Verriegelungselement (26) hergestellt wird.

14. Verfahren nach einem der vorangehenden Ansprüche, **dadurch gekennzeichnet, dass** die Heuwerbungsmaschine (1) als Schwader ausgebildet ist und jede Bearbeitungseinheit (20) als Schwadereinheit ausgebildet ist, die eine Aufnahmevorrichtung (21) aufweist sowie eine Querfördervorrichtung (22), wobei die Aufnahmevorrichtung (21) dazu eingerichtet ist, landwirtschaftliches Erntegut vom Boden (30) aufzunehmen und an die Querfördervorrichtung (22) zu übergeben, und die Querfördervorrichtung (22) dazu eingerichtet ist, das übergebene Erntegut entlang der Querachse (Y) zu fördern und schwadweise auf dem Boden (30) abzulegen.

15. Heuwerbungsmaschine (1), welche einen Hauptrahmen (2) sowie zwei beiderseits am Hauptrahmen (2) angeordnete Seiteneinheiten (6) aufweist, mit jeweils einem Ausleger (7), der sich in einer Seitenposition von einem Anbindungsbereich (3) des Hauptrahmens (2) entlang einer Querachse (Y) seitwärts erstreckt, und einer am Ausleger (7) angeordneten Bearbeitungseinheit (20) zur Feldbearbeitung, welche Bearbeitungseinheit (20) am Ausleger (7) verstellbar ist zwischen einer näher am Anbindungsbereich (3) angeordneten Innenposition und einer weiter vom Anbindungsbereich (3) entfernten Außenposition, wobei die Heuwerbungsmaschine (1), ausgehend von einer Arbeitsposition, in welcher die Ausleger (7) in der Seitenposition sind, zur Durchführung der folgenden Schritte eingerichtet ist:
- Verstellen jeder Bearbeitungseinheit (20) relativ zum Hauptrahmen (2) in eine Aufstellposition, wenigstens anteilig durch Schwenken um jeweils eine Einheit-Schwenkachse (A), welche sich bezogen auf die Seitenposition der Ausleger (7) wenigstens überwiegend entlang der Querachse (Y) erstreckt,
- Verstellen der Ausleger (7) relativ zum Hauptrahmen (2), wenigstens anteilig durch Schwenken um jeweils ein sich wenigstens überwiegend entlang einer Hochachse (Z) erstreckende, im Anbindungsbereich (3) angeordnete Ausleger-Schwenkachse (B) zur Längsachse (X) hin in eine Längsposition, wobei das Verstellen der Ausleger (7) erfolgt, während die Bearbeitungseinheiten (20) wenigstens zeitweise in der Außenposition sind, sowie
- Verstellen der Bearbeitungseinheiten (20) in die Innenposition, nachdem das Verstellen der Ausleger (7) wenigstens teilweise durchgeführt wurde.
